# EUROPEAN PATENT SPECIFICATION

(11) **EP 2 625 322 B1**
(45) Date of publication and mention of the grant of the patent: **09.01.2019**
(21) Application number: 11831496.2
(22) Date of filing: 05.10.2011
(51) Int. Cl.: D01D 10/02, D06C 7/00, D01F 6/60, D04H 1/728, D01F 6/80, D04H 1/4326, D04H 1/4342, B01D 71/64, B01D 69/06

(54) **RAPID THERMAL CONVERSION OF A POLYAMIC ACID FIBER TO A POLYIMIDE FIBER**
SCHNELLE THERMISCHE UMWANDLUNG EINER POLYAMIDSÄUREFASER IN EINE POLYIMIDFASER
CONVERSION THERMIQUE RAPIDE DE FIBRE DE POLY(ACIDE AMIQUE) EN FIBRE DE POLYIMIDE

(30) Priority: 07.10.2010 US 899770
(43) Date of publication of application: 14.08.2013
(73) Proprietor: E. I. du Pont de Nemours and Company, Wilmington, DE 19898 (US)
(72) Inventor: DENNES, T., Joseph, Parkesburg Pennsylvania 19365 (US); KRISHNAMURTHY, Lakshmi, Wilmington Delaware 19808 (US); SIMMONDS, Glen, Edward, Avondale Pennsylvania 19311 (US); FRISK, Simon, Newark Delaware 19711 (US)
(74) Representative: Heinemann, Monica
(86) International application number: PCT/US2011/054863
(87) International publication number: WO 2012/047960

(56) References cited:
- EP-A1- 2 037 029
- WO-A2-2011/081914
- GB-A- 903 272
- JP-A- H03 264 333
- JP-A- H08 231 719
- JP-A- 2010 077 565
- KR-B1- 940 000 963

## Description

This application claims foreign priority under, and the benefit of, U.S. Application SN 12/899,770, filed October 7, 2010, which is by this reference incorporated in its entirety as a part hereof for all purposes.

### RELATED APPLICATIONS

This application is related in subject matter to copending U.S. Provisional Patent Application Nos. 61/286618, 61/286628, and 61/286623 filed on December 15, 2009.

### FIELD OF THE INVENTION

The present invention is directed to a process of rapid thermal conversion of a polyamic acid fiber, nanofiber, or nanoweb to a polyimide fiber, nanofiber, and nanoweb respectively.

### BACKGROUND OF THE INVENTION

Polyimides (PIs) are an important class of high performance polymers and are used in a wide range of applications e.g., microelectronics, aviation industry, separation membranes, separators for batteries. PIs are traditionally synthesized in a two step process. First, a polyamic acid is prepared by low-temperature polycondensation of a tetracarboxylic acid dianhydride with an organic diamine in an aprotic polar solvent. The polyamic acid so prepared is then converted to polyimide thermally, chemically, or using a combination of both. According to mechanism behind the conversion of polyamic acid to polyimide, as discussed by Bryant, R. G., Polyimides, Encyclopedia of Polymer Science and Technology, 2006, the rate of imidization is faster in the early stages of conversion due to lower Tg of the polymer and higher availability of solvent to assist in the ring closure. However, with increased conversion, the rate of imidization decreases as the Tg of the polymer increases and availability of solvent decreases. This two step rate effect was observed in fibers (high surface area) and cast films, with thicker films having a higher initial imidization rate. Furthermore, dry polyamic acid powders with the highest surface to volume ratio imidized the slowest. Thermal conversion of polyamic acid to polyimide disclosed in the literature are long, taking anywhere from 20 minutes to hours.

Huang et al., European PolymerJournal 42 (2006) 1099-1104, disclose preparation of BPDA-PDA polyimide films and electrospun nanofiber sheets by imidizing electrospun BPDA-PDA polyamic acid by thermal annealing in vacuum at temperature in the range of 100 °C to 450 °C for a total time of over 3 hours.

Zhang et al., The 2006 International Conference on MEMS, NANO and Smart Systems disclose a series of sequential thermal treatments at 80°C to 300°C, to convert PMDA-ODA PAA electrospun fibers into polyimide, requiring a total time of 4 hours and 30 minutes.

Jirsak et al.Journal of Nanomaterials, doi:10.1155/2010/842831 disclose thermally imidizing thin layer of electrospun fibers of ODPA-ODA polyamic acid by following a series of thermal annealing steps at a temperature range of 60 °C to 300 °C for a total time of 6 hours.

Long imidization times for the conversion of PAA to PI results in an overall increase in the cost of manufacturing, which in turn can affect the profit margin. Hence, there is a need for new methods of making a polyimide fiber from a polyamic acid fiber using a shorter time for the thermal conversion of polyamic acid to polyimide.

EP 2 037 029 A1 describes a non-woven fabric composed of polyimide fibers which are obtained by polycondensation of at least an aromatic tetracarboxylic acid and an aromatic diamine having a benzoxazole structure and having a fiber diameter in the range of 0.001 µm to 1 µm.

WO 2011/081914 A2 discloses a method for enhancing the properties of polyimide nanowebs, the method comprising subjecting a nanoweb consisting essentially of a plurality of nanofibers of an aromatic polyimide to a temperature at least 50°C higher than the imidization temperature thereof for a period of time in the range of 5 seconds to 20 minutes.

GB 903 272 A1 describes a process for preparing polyimides comprising reacting approximately equimolar proportions of at least one diamine having the structural formula: H₂N-R1-NH₂ wherein R1 is a divalent radical containing at least 2 carbon atoms, the two amino groups of said diamine each attached to separate carbon atoms of said divalent radical; with at least one tetracarboxylic acid dianhydride having the structural formula: 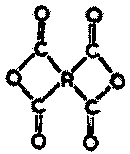 wherein R is a tetravalent radical containing at least 2 carbon atoms, no more than 2 carbonyl groups of said dianhydride attached to any one carbon atom of said tetravalent radical.

### SUMMARY OF THE INVENTION

In an aspect, this invention provides a process comprising heating a polyamic acid fiber to a temperature in the range of a first temperature and a second temperature for a period of time in the range of 5 seconds to 30 seconds at a rate in the range of 60 °C/minute to 250 °C/second, or from 250 °C/minute to 250 °C/second to form a polyimide fiber, wherein the first temperature is the imidization temperature of the polyamic acid and the second temperature is the decomposition temperature of the polyimide and wherein the polyamic acid fiber comprises a plurality of polyamic acid nanofibers, the nanofibers having a number average diameter less than 1000 nm.

### BRIEF DESCRIPTION OF THE DRAWINGS

Figure 1 is a schematic illustration of an exemplary electroblowing apparatus.
Figure 2 is a schematic illustration of a portion of an exemplary infra-red oven.

### DESCRIPTION OF THE INVENTION

In accordance with the present invention, there is provided a process comprising heating a polyamic acid (PAA) fiber to a temperature in the range of a first temperature and a second temperature for a period of time in the range of 5 seconds to 30 seconds at a rate in the range of 60 °C/minute to 250 °C/second, or from 250 °C/minute to 250 °C/second to form a polyimide fiber, wherein the first temperature is the imidization temperature of the polyamic acid and the second temperature is the decomposition temperature of the polyimide and wherein the polyamic acid fiber comprises a plurality of polyamic acid nanofibers, the nanofibers having a number average diameter less than 1000 nm.

As used herein, the term "fiber" refers to fibers having a number average diameter less than 10 microns, even less than 3 microns, and even less than 1500 nm. Furthermore, the term "nanofibers" as used herein refers to fibers having a number average diameter less than 1000 nm, even less than 800 nm, even between 50 nm and 500 nm, and even between 100 and 400 nm. In the case of non-round cross-sectional nanofibers, the term " diameter" as used herein refers to the greatest cross-sectional dimension.

Polyamic acid **I** can be converted to polyimide **II** thermally, chemically, or using a combination of both, as shown below in the reaction scheme (1). Depending upon the nature of the R group, the polyimide **II** can be partially aromatic or fully aromatic. The invention as disclosed herein of converting PAA **I** fibers to PI **II** fibers focuses on thermal conversion only. However, the thermal conversion of PAA I to PI II as disclosed herein, can be combined with chemical conversion to further decrease the conversion time or optimize the process.

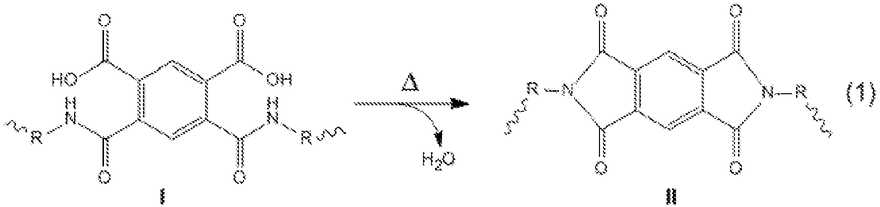

A polyamic acid fiber can be fabricated by any suitable process. In one method suitable for the invention, a polyamic acid fiber is obtained by electroblowing a solution of polyamic acid, as described in detail, *infra.* In another method, a polyamic acid fiber is obtained by electrospinning a solution of polyamic acid. Electrospinning is well known in the art and Huang et al., Adv. Mat. DOI: 10.1002/adma.200501806 disclose electrospinning a polyamic acid solution to form a mat of polyamic acid nanofibers. However, other fiber making techniques such as melt blowing can be used. In one embodiment, the polyamic acid fiber comprises a polyamic acid nanofiber. In another embodiment, the polyamic acid nanofiber is in the form of a polyamic acid nanoweb. In one embodiment, the nanoweb comprises a plurality of polyamic acid nanofibers.

The term "nanoweb" as employed herein represents a subset of "nonwoven" articles wherein the fibers are designated "nanofibers" that are characterized by number average cross-sectional diameters of less than 1000 nm. For the purposes of the present invention, the ISO 9092 definition of the term "nonwoven" article shall be used: "A manufactured sheet, web or batt of directionally or randomly orientated fibers, bonded by friction, and/or cohesion and/or adhesion, excluding paper and products which are woven, knitted, tufted, stitch-bonded incorporating binding yarns or filaments, or felted by wet-milling, whether or not additionally needled. The fibers can be of natural or manufactured origin. They can be staple or continuous filaments or be formed in situ." The nanowebs employed herein define a planar structure that is relatively flat, flexible, and porous, and is formed by the lay-down of one or more continuous filaments.

Polyamic acid **I** used in electroblowing and electrospinning described *supra* can be obtained by reacting a tetracarboxylic acid dianhydride **III** with an organic diamine **IV** in an aprotic polar solvent at low to moderate temperatures, as shown in the reaction scheme (2):

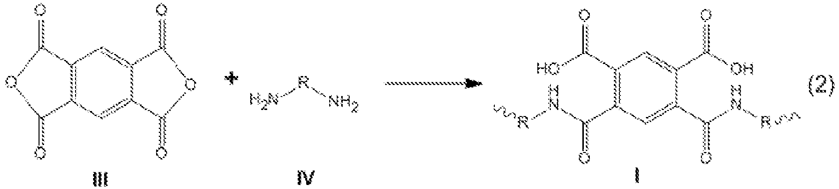

The mole ratio of tetracarboxylic acid dianhydride III and an organic diamine IV in the reaction (2) is between 0.2 to 6, or 0.5 to 2.0 or 0.9 to 1.0.

Any suitable tetracarboxylic acid dianhydride **III** can be used in the reaction scheme (2), including, but not limited to, pyromellitic dianhydride (PMDA); biphenyltetracarboxylic dianhydride (BPDA); 3,3',4,4'-benzophenone tetracarboxylic dianhydride (BTDA); 2,3,6,7-naphthalene tetracarboxylic dianhydride; 3,3',4,4'-tetracarboxybiphenyl dianhydride; 1,2,5,6-tetracarboxynaphthalene dianhydride; 2,2',3,3'-tetracarboxybiphenyl dianhydride; 2,2-bis(3,4-dicarboxyphenyl) propane dianhydride; bis(3,4-dicarboxyphenyl) sulfone dianhydride; bis(3,4-dicarboxyphenyl) ether dianhydride; naphthalene-1,2,4,5-tetracarboxylic dianhydride; naphthalene-1,4,5,8-tetracarboxylic dianhydride; pyrazine-2,3,5,6-tetracarboxylic dianhydride; 2,2-bis(2,3-dicarboxyphenyl) propane dianhydride; 1,1-bis(2,3-dicarboxyphenyl) ethane dianhydride; 1,11-bis(3,4-dicarboxyphenyl) ethane dianhydride; bis(2,3-dicarboxyphenyl) methane dianhydride; bis(3,4-dicarboxyphenyl) methane dianhydride; benzene-1,2,3,4-tetracarboxylic dianhydride; 3,4,3',4'-tetracarboxybenzophenone dianhydride; Perylene-3,4,9,10-tetracarboxylic dianhydride; Bis-(3,4-dicarboxyphenyl) ether tetracarboxylic dianhydride; and mixtures thereof.

Suitable organic diamines **IV** include, but are not limited to, oxydianiline (ODA), 1,3-bis(4-aminophenoxy)benzene (RODA), and 1,4 Phenylenediamine (PDA); m-Phenylenediamine; p-Phenylenediamine; 4,4'-Diaminodiphenyl propane; 4,4'-Diaminodiphenyl methane Benzidine; 4,4'-Diaminodiphenyl sulfide; 4,4'-Diaminodiphenyl sulfone; 4,4'-Diaminodiphenyl ether; 1,5-Diaminonaphthalene; 3,3'-Dimethyl benzidine; 3,3'-Dimethoxy benzidine; Bis-(para-beta-amino-t-butylphenyl) ether; 1-Isopropyl-2,4-m-phenylenediamine; m-Xylylenediamine; p-Xylylenediamine; Di(paraminocyclohexyl) methane; Hexamenthylenediamine; Heptamethylenediamine; Octamethylenediamine; Decamethylenediamine; Nonamethylenediamine; 4,4-DimethylheptamethylIenedia-2,11-Diaminododecane; 1,2-Bis(3-aminopropoxyethane); 2,2-Dimethylpropylenediamine; 3-Methoxyhexamethylenediamine; 2,5-Dimethyl hexamethylenediamine; 3-Methylheptamethylenediamine; Piperazine; 1,4-Diamino cyclohexane; 1,12-Diamino octadecane; 2,5-Diamino-1,3,4-thiadiazole; 2,6-Diaminoanthraquinone; 9,9'-Bis(4-aminophenyl fluorene); p,p'-4,4 Bis(aminophenoxy); 5.5'-Diamino-2,2'-bipyridylsuIfide; 2,4-Diaminoisopropyl benzene; and mixtures thereof.

For the purposes of the present invention, Table 1 shows the abbreviations and designations of some of the commonly used dianhydrides **III** and diamines **IV,** consistent with the practice in the polyimide art:

| Table 1 | | |
|---|---|---|
| Abbreviation | Chemical Name | Chemical Structure |
| PMDA | Pyromellitic Dianhydride | 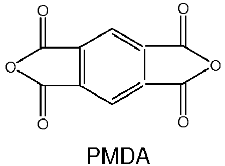 |
| BPDA | Biphenyltetracarboxylic Dianhydride | 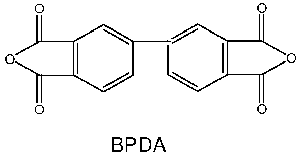 |
| ODA | Oxydianiline | 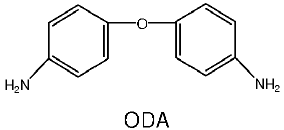 |
| RODA | 1,3-bis(4-aminophenoxy) benzene | 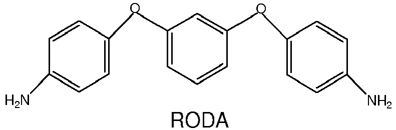 |
| PDA | 1,4 Phenylenediamine | 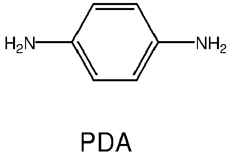 |
| TDI | 2,4 - toluene diisocyanate and 2,6 toluene diisocyanate | 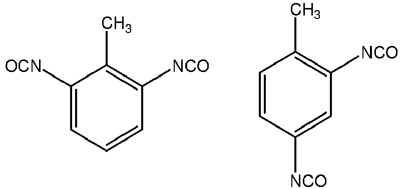 |
| MDI | Methylene diphenyl 4,4'-diisocyanate | 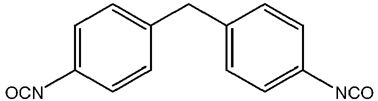 |
| BTDA | 3,3',4,4'-benzophenone tetracarboxylic dianhydride | 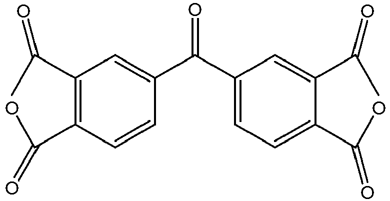 |

Any suitable aprotic polar solvent can be used in the synthesis of polyamic acid **I**, in the reaction scheme (2). A suitable organic solvent acts as a solvent for the polyamic acid and at least one of the reactants. A suitable solvent is inert to the reactants (the dianhydrides **III** or the diamines **IV**). In one embodiment, the solvent is a solvent for polyamic acid and both the dianhydride and the diamine. The normally liquid organic solvents of the N,N-dialkylcarboxylamide class are useful as solvents in the process of this invention. Exemplary solvents include, but are not limited to, N,N-dimethylformamide and N,N-dimethylacetamide (DMAC), N,N-diethylformamide (DMF), N,N-diethylacetamide, N,N-dimethylmethoxyacetamide, N-methyl-2-pyrrolidone, N-methylcaprolactam, and the like. Other solvents which can be used in the present invention are: dimethylsulfoxide, tetramethyl urea, pyridine, dimethylsulfone, hexamethylphosphoramide, tetramethylene sulfone, formamide, N-methylformamide, butyrolactone, and N-acetyl-2-pyrrolidone. The solvents can be used alone, in combinations of solvents, or in combination with poor solvents such as benzene, benzonitrile, dioxane, xylene, toluene, and cyclohexane.

The molecular weight of the polyamic acid I obtained from the reaction scheme (2) is dependent upon several factors, such as, purity of the monomers, extent of moisture exclusion, choice of solvent, and maintenance of low to moderate temperatures. Reaction (2) can be performed at temperatures up to 175°C, but preferably at temperatures below 75°C. The temperature limitation results from three possible reactions which would limit molecular weight: (a) partial conversion to polyimide, releasing water which would hydrolyze the polyamic acid **I**; (b) extensive conversion to polyimide **II** above 100°C, which, in addition to hydrolysis, could result in premature precipitation of low-molecular weight polymer out of the reaction medium; and (c) possible transamidation with the solvents.

The process hereof comprises heating the polyamic acid fiber so obtained, to a temperature in the range of a first temperature and a second temperature for a period of time in the range of 5 seconds to 30 seconds. The first temperature is the imidization temperature of the polyamic acid. For the purposes of the present invention, the imidization temperature for a given polyamic acid fiber is the temperature below 500 °C at which in thermogravimetric (TGA) analysis performed at a heating rate of 50 °C/min, the % weight loss/°C decreases to below 1.0, preferably below 0.5 with a precision of ± 0.005% in weight % and ± 0.05 °C. The second temperature is the decomposition temperature of the polyimide fiber formed from the given polyamic acid fiber. Furthermore, for the purposes of the present invention, the decomposition temperature of the polyimide fiber is the temperature above the imidization temperature at which in thermogravimetric (TGA), the % weight loss/°C increases to above 1.0, preferably above 0.5 with a precision of ± 0.005% in weight % and ± 0.05 °C.

In one method suitable for the practice of invention, a polyamic acid fiber is pre-heated at a temperature in the range of room temperature and the imidization temperature before the step of heating the polyamic acid fiber at a temperature in the range of the imidization temperature and the decomposition temperature. This additional step of pre-heating below the imidization temperature allows slow removal of the residual solvent present in the polyamic acid fiber and prevents the possibility of flash fire due to sudden removal and high concentration of solvent vapor if heated at or above the imidization temperature.

The step of thermal conversion of the polyamic acid fiber to the polyimide fiber can be performed using any suitable technique, such as, heating in a convection oven, vacuum oven, infra-red oven in air or in inert atmosphere such as argon or nitrogen. A suitable oven can be set at a single temperature or can have multiple temperature zones, with each zone set at a different temperature. In an embodiment, the heating can be done step wise as done in a batch process. In another embodiment, the heating can be done in a continuous process, where the sample can experience a temperature gradient. The polyamic acid fiber is heated at a rate in the range of 60 °C/minute to 250 °C/second, or from 250 °C/minute to 250 °C/second.

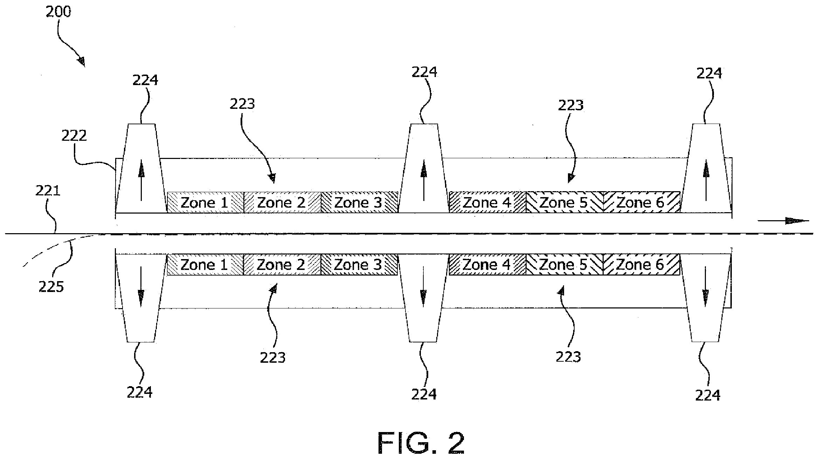

In one embodiment, the polyamic acid fiber is heated in a multi-zone infrared oven with each zone set to a different temperature. In an alternative embodiment, all the zones are set to the same temperature. In another embodiment the infrared oven further comprises an infra-red heater above and below a conveyor belt. In a further embodiment of the infrared oven suitable for use in the invention, each temperature zone is set to a temperature in the range of room temperature and a fourth temperature, the fourth temperature being 150 °C above the second temperature. Figure 2 schematically illustrates a portion of an exemplary 6 zone infra-red oven, described in detail *infra.* It should be noted that the temperature of each zone is determined by the particular polyamic acid, time of exposure, fiber diameter, emitter to emitter distance, residual solvent content, purge air temperature and flow, fiber web basis weight - (basis weight is the weight of the material in grams per square meter). For example, conventional annealing range is 400-500 °C for PMDA/ODA, but is around 200 °C for BPDA/RODA; BPDA/RODA will decompose if heated to 400 °C. Also, one can shorten the exposure time, but increase the temperature of the infra-red oven and vice versa. In one embodiment, the fiber web is carried through the oven on a conveyor belt and goes through each zone for a total time in the range of 5 seconds to 5 minutes, set by the speed of the conveyor belt. In another embodiment, the fiber web is not supported by a conveyor belt.

The process of heating a polyamic acid fiber at a temperature in the range of the first temperature and the second temperature results in a degree of imidization (DOI) defined *infra,* of at least 0.51, preferably a DOI of at least 0.54, most preferably a DOI of at least 0.57. Under most circumstances, analytical methods show that complete imidization is rarely achieved, even after long imidization times. For practical purposes, complete imidization is achieved when the slope of the percentage imidization versus time curve approaches zero over some selected time interval to be determined according to the needs of the practitioner hereof.

The polyamic acid fiber comprises a polyamic acid nanofiber. In another embodiment, the polyamic acid nanofiber is in the form of a polyamic acid nanoweb. In a method suitable for the practice of the invention, a polyamic acid nanoweb is calendered before the step of heating the polyamic acid at a temperature in the range of the first temperature to the second temperature for the conversion of the polyamic acid to the polyimide.

Polyimides are typically referred to by the names of the condensation reactants that form the monomer unit. That practice will be followed herein. Thus, the polyimide formed from the monomer units: pyromellitic dianhydride (PMDA) and oxy-dianiline (ODA) and represented by the structure below is designated PMDA/ODA. 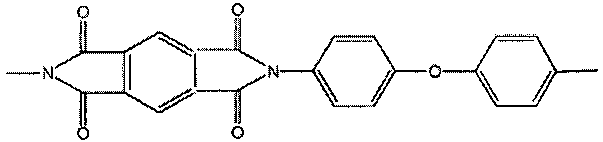 In one embodiment, the polyimide nanoweb consists essentially of polyimide nanofibers formed from the monomer units: pyromellitic dianhydride (PMDA) and oxy-dianiline (ODA), using the method described *supra.*

In another embodiment, the polyimide fiber of this invention comprises more than 80 weight% of one or more fully aromatic polyimides, more than 90 weight% of one or more fully aromatic polyimides, more than 95 weight% of one or more fully aromatic polyimides, more than 99 weight% of one or more fully aromatic polyimides, more than 99.9 weight% of one or more fully aromatic polyimides, or 100 weight% of one or more fully aromatic polyimides. As used herein, the term "fully aromatic polyimide" refers specifically to polyimides in which the ratio of the imide C-N infrared absorbance at 1375 cm⁻¹ to the p-substituted C-H infrared absorbance at 1500 cm⁻¹ is greater than 0.51 and wherein at least 95% of the linkages between adjacent phenyl rings in the polymer backbone are effected either by a covalent bond or an ether linkage. Up to 25%, preferably up to 20%, most preferably up to 10%, of the linkages can be effected by aliphatic carbon, sulfide, sulfone, phosphide, or phosphone functionalities or a combination thereof. Up to 5% of the aromatic rings making up the polymer backbone can have ring substituents of aliphatic carbon, sulfide, sulfone, phosphide, or phosphone. Preferably the fully aromatic polyimide suitable for use in the present contains no aliphatic carbon, sulfide, sulfone, phosphide, or phosphone.

### EXAMPLES

### TEST METHODS

### DETERMINATION OF DEGREE OF IMIDIZATION (DOI)

The infrared spectrum of a given sample was measured, and the ratio of the imide C-N absorbance at 1375 cm⁻¹ to the p-substituted C-H absorbance at 1500 cm⁻¹ was calculated. This ratio was taken as the degree of imidization (DOI). It has been found that a PMDA/ODA polyamic acid nanoweb that has been subject to imidization conditions for a time well in excess of that thought to be necessary to achieve maximum imidization exhibits a DOI of 0.57. By comparison, a PMDA/ODA film sample had a DOI of 0.65. The difference can be attributable to sample effects, such as orientation in the nanofibers in the nanoweb that is not present in the film.

For the purposes of the present invention, a fully imidized nanoweb is one in which the 1375/1500 cm⁻¹ peak ratio (DOI) is greater than 0.51.

The polyimide nanowebs hereof were analyzed by ATR-IR using a DuraSampl*I*R (ASI Applied Systems) accessory on a Nicolet Magna 560 FTIR (ThermoFisher Scientific). Spectra were collected from 4000-600 cm⁻¹ and were corrected for the ATR effect (depth of penetration versus frequency).

### CRYSTALLINITY INDEX METHOD

The parameter "crystallinity index" as employed herein refers to a relative crystallinity parameter determined from Wide-Angle X-ray Diffraction (WAXD). X-ray diffraction data were collected with a PANalytical X'Pert MPD equipped with a Parabolic X-ray Mirror and Parallel Plate Collimator using Copper radiation. Samples for transmission geometry were prepared by stacking the thin films to a total thickness of approximately 0.7 mm. Data was collected over a range of two-theta of 3 to 45 degrees with a step size of 0.1 degree. Count time per data point was 10 seconds minimum with the sample rotating about the transmission axis at a rate of 0.1 revolutions per second.

The WAXD scan so generated consisted of three contributions: 1) a background signal; 2) scattering from ordered but amorphous regions; and 3) scattering from crystalline regions. A polynomial background was fitted to the baseline of the diffraction data. The background function was chosen to be a third order polynomial in the two-theta diffraction angle variable. The background subtracted data was then least squares fitted with a series of Gaussian peaks which represented either ordered amorphous or crystalline components. Guided by experience with numerous samples of the same composition but widely differing in crystallinity, it was decided which peaks represented the crystalline regions. The ratio of the integral under the crystalline peaks so selected, to the integral under the overall scan curve with the background subtracted was the crystallinity index.

Peaks shown in Table 2 were obtained for PMDA-ODA polyimides.

Since the determination of which peaks are sufficiently sharp that they ought to be considered part of the crystalline phase is somewhat arbitrary, the absolute crystalline content of the sample is still unknown. However, the crystallinity index determined in this way allows us to compare the relative crystallinity of two polymers of the same polymer type.

**Table 2**

| WAXD (Two-theta degrees) |
|---|
| 11.496 |
| 15.059 |
| 16.828 |
| 22.309 |

### VISCOSITY DETERMINATION

Solution viscosity was determined using a Brookfield Engineering HADV-II+ Programmable Viscometer equipped with an RV/HA/HB-5 or - 6 spindle, and calibrated using NIST traceable silicone fluids. The spindle was immersed into the polymer solution at room temperature until the liquid level reached the indent on the spindle. The motor was turned on with the RPMs set to produce 10-20% nominal torque. For solutions of 40-70 poise, it was found that 10-20 rpm was appropriate with the RV/HA/HB-5 spindle and 20 rpm was appropriate for RV/HA/HB-6 spindle.

### FIBER SIZE DETERMINATION

Fiber diameter was determined using the following method.
1. One or more SEM (Scanning Electron Microscope) images were taken of the nanoweb surface at a magnification that included 20∼60 measurable fibers.
2. Three positions on each image were selected which appeared by visual inspection to represent the average appearance of the nanoweb.
3. Image analysis software was used to measure the fiber diameter of 60 to 180 fibers and calculate the mean from the selected areas.

### POLYMER PREPARATION

### POLY(AMIC ACID) SOLUTION 1 (PAA-1)

34.10 kg of PMDA (DuPont Mitsubishi Gas Ltd.) was combined in a 100 Gallon stirred stainless steel reactor with 32.19 kg of 4,4 ODA (Wakayama Seika) and 1.30 kg of phthalic anhydride (Aldrich Chemical) in 234.33 kg of DMF (DuPont). They were mixed and reacted while stirring at room temperature for 30 hours to form polyamic acid by first adding the ODA to the DMF, then adding the PMDA and finally adding the phthalic anhydride. The resulting polyamic acid had a room temperature solution viscosity of 68 poise.

Similar procedure was used to form two other polyamic acid solutions: PAA-2 and PAA3. Table 3 summarizes the reactants used, molar ratios thereof, weight % solids, and viscosity for each polyamic acid solution

| **Table 3** | | | | | | |
|---|---|---|---|---|---|---|
| Sample # | Monomers (mole ratio) | | | Polyamic acid solution | | |
| | PMDA | ODA | Phthalic Anhydride | Solvent | Polymer weight % | Viscosity (Poise) |
| PAA-1 | 0.97 | 1.0 | 0.06 | DMF | 22.4 | 68 |
| PAA-2 | 0.98 | 1.0 | 0.04 | DMF | 23.7 | 72 |
| PAA-3 | 0.97 | 1.0 | 0.06 | DMF | 23.5 | 67 |

### NANOWEB PREPARATION

### APPARATUS

Electroblowing was introduced to overcome the productivity problem in electrospinning thin fibers. In electroblowing, a turbulent air flow is directed to the fibers as they are spun thereby forming a "cloud" of polymer fibers that is blown down onto the target surface as well as being electrostatically attracted. The combination of blowing and electrostatic forces greatly increases the productivity of the system. Electroblowing is described in detail in U.S. Published Patent Application No. 20050067732.

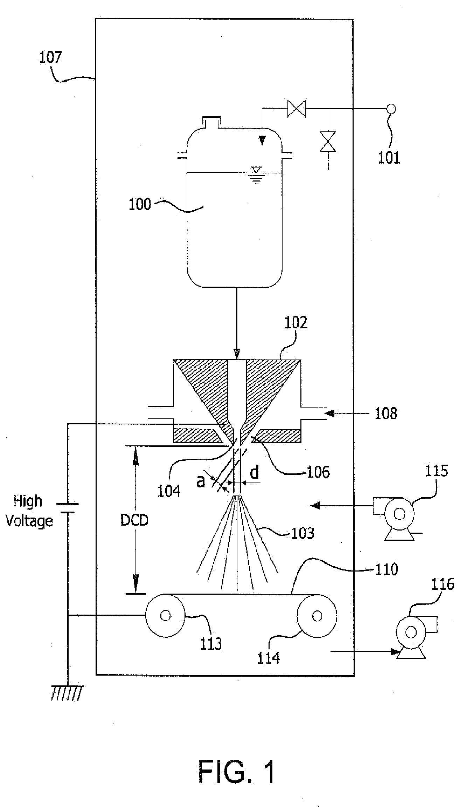

Nanowebs were prepared from the polyamic acid solutions prepared *supra* by electroblowing. Figure 1 depicts one embodiment of suitable electroblowing apparatus. The polymer solution was manually loaded using a syringe, not shown, into a 250 ml Hoke cylinder, **100**. A pressurized nitrogen supply, **101**, was used to deliver the solution to a 10 cm wide spinneret, **102**, having 3 nozzles each with a diameter of 0.38 mm and length 3.8 mm, arranged 1 cm apart, centered in the spinneret. Heated, compressed air, **108**, was fed to the spinneret and was ejected through slots, **106**. The fibers, **103**, were both blown by the air and attracted by a DC voltage electric potential to a metallic plate collector, **110** which maintains the ground connection to a battery operated windup, **113**. A roll of scrim material, **114** was mounted on the end of the plate collector. In an alternative configuration, the metallic plate collector, **110**, the battery operated windup, **113**, and the scrim material, **114** were removed and replaced with a rotating drum collector (not shown) **connected to a ground**. Heated, pressurized air, **115**, was also blown into a Plexiglas® enclosure, **107**, containing the entire spinning apparatus. An exhaust blower, **116**, was used to maintain atmospheric pressure inside the enclosure and to remove all evaporated solvent.

### NANOWEB PREPARATION

### NANOWEB #3 (NW - 1)

60 cc of PAA - 1 was manually charged to the apparatus depicted in Figure 1. The distance from the nozzle, **104**, to the metallic plate collector, **110**, was 35.6 cm and the potential difference applied was between the nozzle and the belt was 110 kV. Solution discharge pressure was 57 psig, and process gas flow was 15 cfm at a temperature of 23 °C. The auxiliary air supply, **115**, was heated to 55 °C and blown into the fiber spinning chamber, **107**, at a flow rate of 10 cubic feet per minute. The nanoweb structure was collected on a rotating drum collector.

### NANOWEBS #2-6 (NW 2-5)

PAA-2 - PAA-6 were employed in the preparation of nanowebs using the equipment and procedures employed in preparing NW-1. Specific conditions employed in preparing NW-1 to NW-6 are summarized in Table 18.

The nanowebs were then calendered at room temperature between a hard steel roll and a cotton covered roll at the pressures shown in Table 4 (pounds per linear inch) on a BF Perkins calender.

| **Table 4** | | | | | | | | |
|---|---|---|---|---|---|---|---|---|
| Sample # | Polymer solution | Solution temp., ºC | Solution feed pressure, psi | Process gas temp., ºC | Process gas flow, cfm | Auxiliary air temp., ºC | Auxiliary air flow, cfm | Calender pressure, pli |
| NW-1 | PAA-1 | 26 | 57 | 23 | 15 | 55 | 10 | 1245 |
| NW-2 | PAA-1 | 27 | 75 | 24 | 17 | 75 | 10 | 1245 |
| NW-3 | PAA-2 | 25 | 90 | 22 | 18 | 110 | 10 | 1245 |
| NW-4 | PAA-3 | 30 | 130 | 24 | 18 | 130 | 10 | 830 |
| NW-5 | PAA-3 | 30 | 130 | 24 | 18 | 130 | 10 | 830 |

### POLYIMIDE NANOWEB PREPARATION

The calendered polyamic acid nanowebs (NW-1 to NW-5) were then heated by passing them through a Glenro Radplane® infrared oven with heating panels arranged such that identical panels were placed above and below the nanoweb, with an emitter to emitter distance of 9 inches. Figure 2 shows a schematic illustration of a portion of an infra-red oven, **200**. The oven enclosure, **222** contained four heating panels, **223**, each divided into three separate temperature zones. Zones facing each other in the panels, **223**, were controlled so that the temperature above and below the nanoweb, **221** was the same, thereby resulting in a total of 6 temperature zones in the oven, **200**. The total heated length within the oven, **200**, was 48 inches. The oven, **200**, also had optional support media, **225**, for the nanoweb, **221**, as shown in the Figure 2. The nanowebs NW-1 and NW-2, were supported in the oven by a woven fiberglass fabric, **225**, which travelled with the nanowebs as a scrim or support material. The nanowebs NW-3, NM-4, and NW-5 were unsupported. The infrared oven, **200**, also had an exhaust system to prevent solvent vapors from entering the laboratory. Room temperature air was pulled through entrance and exit openings of the oven, **200**, and vented through plenums, **224**. Temperatures of the emitters in each temperature zone and the total residence time of the nanowebs through the oven, **200**, are summarized in Table 5. Temperature of the nanoweb was not measured.

| **Table 5** | | | | | | | | |
|---|---|---|---|---|---|---|---|---|
| | | Imidization and Annealing Conditions | | | | | | |
| Example | Polyamic acid nanowebs | Zone 1 Temp., ºC | Zone 2 Temp., ºC | Zone 3 Temp., ºC | Zone 4 Temp., ºC | Zone 5 Temp., ºC | Zone 6 Temp., ºC | Residence time, seconds |
| PI-NW-1 | NW-1 | 400 | 500 | 550 | 606 | 650 | 650 | 6 |
| PI-NW-2 | NW-2 | 400 | 400 | 450 | 500 | 550 | 550 | 16 |
| PI-NW-3 | NW-3 | 400 | 500 | 550 | 606 | 650 | 650 | 16 |
| PI-NW-4 | NW-4 | 400 | 500 | 550 | 606 | 650 | 650 | 35 |
| PI-NW-5 | NW-5 | 400 | 500 | 550 | 606 | 650 | 650 | 16 |

Following heating, samples were cut from the nanowebs and analyzed for the degree of imidization and crystallinity per the test methods described above. Multiple samples were taken from PI-NW 1.1, 1.2, and 3.1 to determine if there was any variation in the degree of imidization and crystallinity. This was particularly of concern on those examples processed with the use of the fiberglass support web. In these cases, in addition to taking multiple samples, the analyses were conducted with the samples facing either up or down within the instruments. Those noted as "top" were samples analyzed using the surface which had faced away from the fiberglass support during processing, while those noted as "bottom" were those analyzed using the surface that contacted the support in the oven. Basis weight is the weight of the nanoweb in grams per square meter. Mean fiber diameter was determined by examining a scanning electron microscope image and estimating the diameter of 100 fibers using image analysis software. Results are summarized in Table 6 as shown below:

| **Table 6** | | | | | | |
|---|---|---|---|---|---|---|
| Example | Imidization/ Annealing time, seconds | Sample | DOI, IRpeak ratio | Crystallinity index | Basis weight, g/m² | Mean fiber diameter , nm |
| PI-NW-1 | 6 | A top | 0.58 | 0.35 | Not measured | 665 |
| | | B top | 0.57 | 0.43 | | |
| | | C top | 0.58 | 0.39 | | |
| | | A bottom | 0.59 | 0.43 | | |
| | | B bottom | 0.53 | 0.33 | | |
| | | C bottom | 0.59 | 0.40 | | |
| PI-NW-2 | 16 | A top | 0.60 | 0.29 | 12.2 | 910 |
| | | B top | 0.60 | 0.31 | | |
| | | C top | 0.61 | 0.32 | | |
| | | A bottom | 0.61 | 0.24 | | |
| | | B bottom | 0.59 | 0.28 | | |
| | | C bottom | 0.59 | 0.32 | | |
| PI-NW-3 | 16 | A | 0.59 | 0.31 | 10.3 | 876 |
| PI-NW-4 | 35 | A | 0.59 | 0.44 | 12.8 | 1077 |
| | | B | 0.59 | 0.29 | | |
| PI-NW-5 | 6 | A | 0.57 | 0.38 | 14.4 | 1077 |

Although the nanoweb temperature can not be measured directly during the rapid heating method described above, it is reasonable to expect that it is below the temperature of the infrared emitters due to convective losses and incomplete infrared absorption.

Table 6 shows that PI-NW-5 (1077 nm diameter) with a DOI of 0.57 can be imidized to similar extent as PI-NW-1 (660 nm diameter) with a DOI in the range of 0.53-0.59 when imidized for the same amount of time of 6 seconds. Furthermore, sub micron and micron sized fibers can be imidized at very short times, on the order of seconds. For example, PI-NW-5 was fully imidized at very short time of 6 seconds, even though with a mean fiber diameter of 1077 nm, PI-NW-5 had a distribution of fiber sizes with a small number of fibers as large as 2-3 microns and as small as 100 nm.

### COMPARATIVE EXAMPLES AA AND BB USING LONGER HEATING TIMES:

A polyamic acid solution of PMDA, ODA, and phthalic anhydride in DMF was formed using 0.98 moles of PMDA, 1 mole of ODA, and 0.04 moles of phthalic anhydride. The polyamic acid solution with 22 weight % solids was spun into nanowebs using the apparatus of Figure 1 per the conditions shown below in Table 21:

| **Table 7** | | | | | | | |
|---|---|---|---|---|---|---|---|
| Sample # | Solution temp., ºC | Solution feed pressure , psi | Process gas temp., ºC | Process gas flow, cfm | Auxiliary air temp., ºC | Auxiliary air flow, cfm | Calender pressure , pli |
| NW-AA | 24 | 90 | 25 | 17 | 102 | 14 | 1250 |
| NW-BB | 23 | 50 | 25 | 17 | 80 | 14 | 1500 |

Nanowebs NW-AA and NW-BB were cut into hand sheets and calendered. Hand sheets were placed into a convection oven set to the temperatures for the times shown in Table 7. Samples were removed from the convection oven in between the various temperatures as the oven was allowed to heat up to the set temperature. The degree of imidization was then measured as described above.

| **Table 7** | | |
|---|---|---|
| Sample | Thermal imidization procedure | DOI, Ratio of peaks |
| NW-AA-a | 200 ºC for 2 minutes; 350 ºC for 4 minutes | 0.55 |
| NW-AA-b | 200 ºC for 2 minutes; 350 ºC for 4 minutes; 400 ºC for 2 minutes | 0.57 |
| NW-AA-c | 200 ºC for 2 minutes; 350 ºC for 2 minutes; 450 ºC for 2 minutes | 0.57 |
| NW-AA-d | 200 ºC for 2 minutes; 500 ºC for 2 minutes; 450 ºC for 2 minutes; | 0.57 |
| NW-BB-a | Ramp to 175 ºC, hold 30 minutes; ramp to 475 ºC, hold 30 minutes (total time: 79 minutes) | 0.56 |
| NW-BB-b | 475 ºC for 30 minutes | 0.62 |
| NW-BB-c | Ramp to 175 ºC, hold 30 minutes; ramp to 350 ºC, hold 30 minutes | 0.55 |
| NW-BB-d | 350 ºC 30 minutes | 0.55 |

These comparative examples show that there is some variability in the degree of imidization at long heating times and also for various heating schemes. Comparison of examples NW-BB-a and NW-BB-b illustrate that even though both samples were held at 475 ºC for 30 minutes, the sample, NW-BB-a, which was ramped to that temperature prior to holding was measured to have a lower degree of imidization than the sample, NW-BB-b, placed into the convection oven at 475 ºC directly without a temperature ramp. Using these results we can state that for practical purposes, any infrared analysis of a polyimide nanoweb wherein the ratio of the peaks at 1375/1500 cm⁻¹ is above 0.51, which is 90 % of 0.57, can be considered to be fully imidized.

## Claims

1. A process comprising:
heating a polyamic acid fiber to a temperature in the range of a first temperature and a second temperature for a period of time in the range of 5 seconds to 30 seconds at a rate in the range of 60 °C/minute to 250 °C/second, or from 250 °C/minute to 250 °C/second to form a polyimide fiber,
wherein the first temperature is the imidization temperature of the polyamic acid and the second temperature is the decomposition temperature of the polyimide, and
wherein the polyamic acid fiber comprises a plurality of polyamic acid nanofibers, the nanofibers having a number average diameter less than 1000 nm.

2. The process of Claim 1, further comprising pre-heating the polyamic acid fiber at a temperature in the range of a room temperature and the first temperature before the step of heating the polyamic acid fiber at a temperature in the range of a first temperature and a second temperature.

3. The process of Claim 1, wherein the step of heating the polyamic acid fiber comprises heating the polyamic acid fiber in an infra-red oven.

4. The process of Claim 1, wherein the polyamic acid fiber comprises a fully aromatic polyamic acid fiber.

5. The process of Claim 4, wherein the fully aromatic polyamic acid fiber comprises PMDA/ODA.

6. The process of Claim 1, wherein the polyimide fiber comprises PMDA/ODA.

7. The process of Claim 1, wherein the plurality of polyamic acid nanofibers are in the form of a polyamic acid nanoweb.

8. The process of Claim 7, further comprising calendering the polyamic acid nanoweb before the step of heating the polyamic acid fiber to a temperature.

9. The process of Claim 1, wherein the polyamic acid fiber has a number average fiber diameter of 1500 nm or less.

10. The process of Claim 1, wherein the polyamic acid fiber has a number average fiber diameter in the range of 100 nm to 1000 nm.

## Patentansprüche

1. Verfahren umfassend:
Erhitzen einer Polyaminsäurefaser auf eine Temperatur im Bereich einer ersten Temperatur und einer zweiten Temperatur für eine Zeitspanne im Bereich von 5 Sekunden bis 30 Sekunden mit einer Rate im Bereich von 60 °C/Minute bis 250 °C/Sekunde oder von 250 °C/Minute bis 250 °C/Sekunde, um eine Polyimidfaser zu bilden,
wobei die erste Temperatur die Imidisationstemperatur der Polyaminsäure ist und die zweite Temperatur die Zersetzungstemperatur des Polyimids ist und
wobei die Polyaminsäurefaser eine Vielzahl von Polyaminsäurenanofasern umfasst, wobei die Nanofasern einen zahlendurchschnittlichen Durchmesser von weniger als 1000 nm aufweisen.

2. Verfahren nach Anspruch 1, ferner das Vorerhitzen der Polyminsäurefaser bei einer Temperatur im Bereich einer Raumtemperatur und der ersten Temperatur vor dem Schritt des Erhitzens der Polyaminsäurefaser bei einer Temperatur im Bereich einer ersten Temperatur und einer zweiten Temperatur umfassend.

3. Verfahren nach Anspruch 1, wobei der Schritt des Erhitzens der Polyaminsäurefaser das Erhitzen der Polyaminsäurefaser in einem Infrarotofen umfasst.

4. Verfahren nach Anspruch 1, wobei die Polyaminsäurefaser eine vollaromatische Polyaminsäurefaser umfasst.

5. Verfahren nach Anspruch 4, wobei die vollaromatische Polyaminsäurefaser PMDA/ODA umfasst.

6. Verfahren nach Anspruch 1, wobei die Polyimidfaser PMDA/ODA umfasst.

7. Verfahren nach Anspruch 1, wobei die Vielzahl von Polyaminsäurenanofasern in Form einer Polyaminsäurenanobahn vorliegt.

8. Verfahren nach Anspruch 7, ferner das Kalandrieren der Polyaminsäurenanobahn vor dem Schritt des Erhitzens der Polyaminsäurefaser auf eine Temperatur umfasst.

9. Verfahren nach Anspruch 1, wobei die Polyaminsäurefaser einen zahlendurchschnittlichen Faserdurchmesser von 1500 nm oder weniger aufweist.

10. Verfahren nach Anspruch 1, wobei die Polyaminsäurefaser einen zahlendurchschnittlichen Faserdurchmesser im Bereich von 100 nm bis 1000 nm aufweist.

## Revendications

1. Procédé comprenant:
le chauffage d'une fibre d'acide polyamique à une température située dans la plage d'une première température et d'une seconde température sur une durée située dans la plage de 5 secondes à 30 secondes à une vitesse située dans la plage de 60°C/minute à 250°C/seconde, ou de 250°C/minute à 250°C/seconde pour former une fibre de polyimide,
la première température étant la température d'imidisation de l'acide polyamique et la seconde température étant la température de décomposition du polyimide, et
la fibre d'acide polyamique comprenant une pluralité de nanofibres d'acide polyamique, les nanofibres ayant un diamètre moyen en nombre inférieur à 1 000 nm.

2. Procédé selon la revendication 1, comprenant en outre le préchauffage de la fibre d'acide polyamique à une température située dans la plage d'une température ambiante et de la première température avant l'étape de chauffage de la fibre d'acide polyamique à une température située dans la plage d'une première température et d'une seconde température.

3. Procédé selon la revendication 1, l'étape de chauffage de la fibre d'acide polyamique comprenant le chauffage de la fibre d'acide polyamique dans un four à infrarouge.

4. Procédé selon la revendication 1, la fibre d'acide polyamique comprenant une fibre d'acide polyamique complètement aromatique.

5. Procédé selon la revendication 4, la fibre d'acide polyamique complètement aromatique comprenant du PMDA/ODA.

6. Procédé selon la revendication 1, la fibre de polyimide comprenant du PMDA/ODA.

7. Procédé selon la revendication 1, la pluralité des nanofibres d'acide polyamique se présentant sous la forme d'un nanovoile d'acide polyamique.

8. Procédé selon la revendication 7, comprenant en outre le calandrage du nanovoile d'acide polyamique avant l'étape de chauffage de la fibre d'acide polyamique à une température.

9. Procédé selon la revendication 1, la fibre d'acide polyamique ayant un diamètre de fibre moyen en nombre de 1 500 nm ou moins.

10. Procédé selon la revendication 1, la fibre d'acide polyamique ayant un diamètre de fibre moyen en nombre situé dans la plage de 100 nm à 1 000 nm.
